# FASCICULE DE BREVET EUROPEEN

(11) **EP 3 510 855 B1**
(45) Date de publication et mention de la délivrance du brevet: **19.02.2020**
(21) Numéro de dépôt: 18212390.1
(22) Date de dépôt: 13.12.2018
(51) Int. Cl.: A01D 46/28

(54) **COLLECTEUR DE FRUITS COMPORTANT DES ÉCAILLES À DÉBATTEMENT LIMITÉ ET ÉCAILLE DESTINÉE À UN TEL COLLECTEUR**
OBSTERNTEMASCHINE, DIE PLATTEN MIT BEGRENZTEM AUSSCHLAG UMFASST, UND PLATTE, DIE FÜR DIESE ERNTEMASCHINE BESTIMMT IST
FRUIT HARVESTER COMPRISING PANELS WITH LIMITED DISPLACEMENT AND PANEL INTENDED FOR SUCH A HARVESTER

(30) Priorité: 11.01.2018 FR 1870020
(43) Date de publication de la demande: 17.07.2019
(73) Titulaire: PELLENC, 84120 Pertuis (FR)
(72) Inventeur: DELRAN, Robert, 84120 Pertuis (FR)
(74) Mandataire: Weber, Etienne Nicolas

(56) Documents cités:
- EP-A1- 2 462 796
- FR-A1- 2 351 581
- FR-A1- 2 983 677
- US-A1- 2017 231 159

## Description

### Domaine technique

La présente invention concerne un collecteur de fruits, pourvu d'écailles, une écaille destinée à un tel collecteur, et une machine à vendanger équipée d'un tel collecteur.

L'invention trouve des applications dans des machines à récolter de petits fruits sur des arbres ou des arbustes ou des vignes plantées selon un motif d'alignement. La récolte s'entend de petits fruits tels que des olives, des noix, des amandes, des prunes, des mirabelles, ou encore des baies de raisin.

Une application particulière de l'invention concerne le domaine viticole où le collecteur de fruits peut équiper une machine à vendanger.

### Etat de la technique antérieure

Un collecteur à écailles est connu, par exemple, des documents EP2462 796 ou FR2351581. Le collecteur décrit dans ces documents comprend deux rangées d'écailles, les rangées d'écailles s'étendant entre une entrée du collecteur et une sortie du collecteur parallèlement à un axe médian de collecteur.

Chaque rangée d'écailles comprenant une succession d'écailles, à chevauchement partiel, montées pivotantes sur un support de façon à pivoter vers la sortie du collecteur lors d'un contact avec un obstacle tel qu'un pied de vigne ou un tronc d'arbre traversant le collecteur à écailles, avec un rappel dans une position de repos. Le chevauchement des écailles permet de former un plancher de collecte apte à recueillir des fruits ou baies détachés des plants parcourus par une machine à récolter pourvue du collecteur.

Les écailles peuvent pivoter par rapport au support, entre la position de repos et au moins une position repliée vers la sortie du collecteur.

Pour récolter les fruits le collecteur à écailles est déplacé le long d'une rangée de plants à la hauteur de la tige ou des troncs des plants, en dessous de la zone fructifère. Lors de ce déplacement les deux rangées d'écailles peuvent passer autour des troncs, et plus précisément de part et d'autre des troncs alignés.

Le tronc de chaque plant autour duquel s'engage le collecteur de fruits vient successivement en contact avec les différentes écailles de chaque rangée d'écailles. Il a pour effet lors du contact de repousser successivement les écailles en les faisant pivoter. Le pivotement des écailles a pour effet de libérer un passage pour le tronc mais reste limité au diamètre du tronc. En poursuivant le déplacement du collecteur à écailles le long de la rangée de plants, et lorsque le tronc n'est plus en contact avec une écaille, l'écaille revient à sa position de repos, sous l'effet d'une force de rappel et referme ainsi le plancher de collecte derrière le tronc.

Le plancher de collecte reste ainsi fermé autour des troncs des différents plants d'une rangée de plants parcourue par le collecteur. Les fruits, baies ou drupes détachés des plants, par secouage, tombent sur le plancher collecteur formé par les écailles. Ils sont ensuite recueillis par des convoyeurs latéraux s'étendant latéralement le long des rangées d'écaille. Les fruits peuvent rouler vers les convoyeurs sous l'effet d'une inclinaison des écailles par rapport à l'horizontale.

### Exposé de l'invention

L'invention procède du constat qu'un certain nombre de fruits traversent inopinément le plancher de collecte formé par les écailles du collecteur de fruits en dépit du recouvrement des écailles.

Il a été constaté plus précisément qu'une ouverture du plancher de collecte peut se produire pendant un bref instant lorsqu'une écaille vient de quitter le tronc qui la poussait dans une position repliée, et que l'écaille suivante de la rangée est encore retenue par le tronc.

Ce phénomène de lacune se trouve amplifié lorsque la force de rappel exercée sur les écailles est importante. Sous l'effet d'une brusque libération de l'écaille lorsqu'elle quitte le tronc qui la retenait dans sa position repliée, et sous l'effet d'un couple de rappel important, l'écaille a tendance non seulement à revenir à sa position de repos, mais encore à outrepasser temporairement cette position de repos.

Le fait d'outrepasser la position angulaire de repos accentue temporairement un débattement divergent de l'écaille par rapport à l'écaille qui la suit immédiatement en direction de la sortie du collecteur et augmente la taille de la lacune laissée derrière le tronc.

Les fruits se trouvant sur l'écaille lors de son pivotement vers la position de repos, accélérés radialement sous l'effet du pivotement peuvent alors traverser inopinément la lacune de recouvrement des écailles derrière le tronc et quitter le collecteur.

Par ailleurs, cette brusque libération de l'écaille et son rappel en conséquence sur une plage angulaire importante, dépassant la plage angulaire formée entre la position de repos et sa position repliée extrême lors de son contact avec le tronc, fatigue rapidement l'articulation. La durée de vie de l'écaille est ainsi réduite par dépassement possible de sa limite élastique mais aussi par fatigue sur un nombre de cycles répétés de pivotement suivis d'un retour brusque vers la position de repos.

L'invention a pour but de surmonter ces difficultés et de réduire voire d'annuler toute lacune dans le recouvrement des écailles susceptible de laisser passer des fruits tout en augmentant sensiblement sa durée de vie.

Pour atteindre ce but l'invention propose un collecteur de fruits à rangées d'écailles conjuguées, les rangées d'écailles s'étendant respectivement entre une entrée du collecteur et une sortie du collecteur parallèlement à un axe médian de collecteur, et les rangées d'écailles comprenant respectivement une succession d'écailles, à chevauchement, montées pivotantes sur un support, avec un rappel dans une position de repos, dans lequel
- chaque écaille présente une extrémité proximale tournée vers le support et une extrémité distale libre opposée à l'extrémité proximale, un bord frontal tourné vers l'entrée du collecteur, et un bord arrière tourné vers la sortie du collecteur, le bord frontal et le bord arrière s'étendant respectivement entre l'extrémité proximale et l'extrémité distale de l'écaille,
- chaque écaille présente un axe médian d'écaille, longitudinal, s'étendant de l'extrémité proximale à l'extrémité distale et formant, dans la position de repos de l'écaille, un angle d'ouverture aigu avec l'axe médian de collecteur, par rapport à l'entrée du collecteur et
- chaque écaille présente une liberté de pivotement par rapport au support, entre la position de repos et au moins une position repliée vers la sortie du collecteur, réduisant l'angle d'ouverture,
Conformément à l'invention, le collecteur est pourvu d'au moins une entrave de limitation d'une amplitude de débattement divergeant, respectivement entre deux écailles successives d'une rangée d'écailles lors d'un mouvement de pivotement d'une écaille entre la position repliée, et la position de repos. En particulier l'entrave comprend une paire d'arrêtoirs conjugués, à complémentarité de forme, solidaires respectivement desdites deux écailles successives.

On entend par position repliée une position atteinte suite à un pivotement de l'écaille essentiellement dans le plan collecteur défini par les rangées d'écailles vers la sortie du collecteur. Il s'agit en particulier d'une position défléchie que peut prendre l'écaille lorsqu'elle est repoussée au contact de la tige ou du tronc d'une plante. Dans son mouvement de pivotement, elle présente alors un angle d'ouverture minimal lors de sa position repliée, cet angle d'ouverture minimal dépendant du diamètre du tronc ou de la tige en contact avec l'écaille.

Plus précisément une entrave de limitation du débattement divergent peut être prévue entre chaque écaille d'une rangée et l'écaille suivante de la rangée en direction de la sortie du collecteur, à l'exception toutefois de la dernière écaille qui n'est pas suivie d'une autre écaille.

Il est entendu que les entraves de limitation d'amplitude de débattement peuvent être prévues sur une seule rangée d'écailles, mais de préférence sur les deux rangées d'écailles conjuguées du collecteur.

Le chevauchement des écailles s'entend comme un recouvrement partiel des écailles. Il peut s'agir notamment d'un recouvrement partiel entre la partie arrière d'une écaille et la partie frontale de l'écaille suivante de sorte qu'il n'y ait pas de lacunes sur un plancher d'écailles formé par les écailles en position de repos.

Un recouvrement partiel des écailles peut être prévu à la fois entre chaque écaille et l'écaille suivante dans une même rangée d'écailles, les écailles étant en position de repos, mais aussi entre des écailles voisines des deux rangées d'écailles. En particulier les extrémités distales libres des écailles d'une des rangées d'écailles du collecteur peuvent chevaucher les extrémités distales libres des écailles de la rangée d'écaille conjuguée. Le chevauchement peut être obtenu, par exemple en inclinant au moins l'une des rangées d'écailles, de sorte que les extrémités distales libres ne soient pas coplanaires.

On définit un angle d'ouverture des écailles entre l'axe médian de collecteur qui va de l'entrée à la sortie du collecteur et un axe médian de chaque écaille entre son extrémité proximale et son extrémité distale.

L'angle d'ouverture qui est sensiblement identique pour toutes les écailles du collecteur se trouvant dans leur position de repos est un angle aigu par rapport à l'entrée du collecteur. Un angle d'ouverture inférieur à l'angle droit facilite le contact par glissement du bord frontal des écailles sur les troncs des plants parcourus par le collecteur et un pivotement progressif des écailles pour libérer un passage du tronc.

Lorsque le bord frontal des écailles entre en contact avec un tronc, l'écaille est repoussée et en particulier son extrémité distale libre pivote vers la sortie du collecteur. Le pivotement réduit temporairement l'angle d'ouverture.

Indépendamment de l'angle d'ouverture les écailles peuvent présenter une légère inclinaison de leur extrémité distale libre vers leur extrémité proximale de manière à faire rouler les fruits vers des collecteurs susceptibles d'être ménagés de part et d'autre du collecteur au voisinage des extrémités proximales des écailles.

La fonction principale de l'entrave est de limiter un débattement divergeant entre deux écailles successives dans leur pivotement respectif par rapport au support. L'entrave n'interdit pas le pivotement des écailles vers leur position repliée mais limite la valeur maximum d'un angle que peut faire une écaille avec l'écaille suivante au cours du pivotement lors du retour vers la position de repos, notamment quand l'écaille amont n'est plus en contact avec le tronc traversant le plancher de collecte. Cet angle peut être mesuré par exemple entre les bords frontaux des écailles ou entre les axes médians des écailles.

La limitation du débattement permet de réduire ou d'annuler une éventuelle lacune qui se formerait entre les écailles consécutives. En effet, lorsqu'une écaille est libérée de son contact avec un tronc, son mouvement de rappel vers la position de repos est limité par celui de l'écaille suivante au moyen de l'entrave. La vitesse du mouvement de retour de l'écaille libérée vers sa position de repos est aussi réduite, sa vitesse étant limitée à la libération du contact avec le tronc par l'accélération de l'écaille vers une position intermédiaire avant sa position de repos et donc sur une plage angulaire réduite. L'entrave permet en particulier d'interdire à l'écaille libérée d'un tronc de retourner librement à sa position de repos de manière brusque et/ou en outrepassant temporairement cette position. Ainsi le retour de l'écaille libérée vers sa position de repos dépend du retour vers sa position de repos de l'écaille suivante.

La réalisation de l'entrave peut prendre plusieurs formes. Une forme de réalisation très simple consiste à prévoir entre chaque écaille et l'écaille suivante un lien souple de longueur fixe, par exemple une cordelette ou une chainette. Le lien souple de longueur fixe est normalement détendu dans la position de repos des écailles ou dans une position repliée vers l'arrière au passage d'un tronc, mais qui est tendue lorsqu'un angle de débattement atteint sa valeur maximum prévue.

Selon la réalisation préférée, correspondant à l'invention, l'entrave comporte une paire d'arrêtoirs conjugués, à complémentarité de forme, solidaires respectivement de deux écailles successives.

Les arrêtoirs conjugués font partie de deux écailles différentes, mais qui se suivent dans la rangée d'écailles. Ils sont considérés comme conjugués lorsqu'ils viennent en interaction mutuelle lors d'un débattement mutuel divergent excessif des deux écailles.

Les arrêtoirs conjugués sont considérés comme étant à complémentarité de forme lorsqu'ils interagissent l'un avec l'autre non pas par frottement tangentiel mais en venant en butée l'un contre l'autre.

Chaque écaille peut comporter ainsi deux arrêtoirs qui ne sont pas conjugués entre eux mais qui sont respectivement conjugués à l'écaille précédente et à l'écaille suivante de la rangée d'écailles.

En particulier, chaque écaille peut comporter un premier arrêtoir ménagé sur une face supérieure de collecte de fruits de l'écaille et un deuxième arrêtoir ménagé sur une face inférieure de l'écaille, opposée à la face supérieure.

Selon un mode de réalisation particulier des arrêtoirs, le premier arrêtoir peut comporter un taquet faisant saillie sur la face supérieure de l'écaille et le deuxième arrêtoir peut comporter un rebord d'une dépression débouchant sur la face inférieure de l'écaille, la dépression excédant la hauteur du taquet lors du pivotement des écailles assemblées sur leur support.

Dans ce cas, le taquet d'une écaille peut se mouvoir, avec une amplitude de débattement limitée, à l'intérieur de la dépression de l'écaille précédente de la rangée d'écailles, en direction de l'entrée du collecteur lors d'un pivotement de l'écaille précédente. Il ne vient pas en butée pour des débattements convergents des écailles successives, c'est-à-dire des débattements tendant à augmenter le chevauchement mutuel des écailles, par rapport à leur chevauchement en position de repos. En revanche, pour des débattements divergents des écailles, c'est-à-dire des débattements tendant à réduire le chevauchement des écailles, pour retrouver leur chevauchement en position de repos, ou qui auraient pour résultat une absence de chevauchement, le taquet d'une écaille vient butter contre le deuxième arrêtoir de l'écaille précédente, en direction de l'entrée du collecteur. Il asservit ainsi le pivotement de l'écaille précédente lors du retour de l'écaille précédente vers sa position de repos en maintenant un chevauchement entre les deux écailles. Le débattement convergent ou divergent entre les écailles s'entend comme un débattement mesuré entre les axes médians des écailles successives. Dans la position de repos des écailles successives, leurs axes médians sont sensiblement parallèles entre eux.

Il convient de préciser que ce mode de réalisation est particulièrement avantageux. En effet, la dépression pratiquée sur la face inférieure des écailles permet également de réduire la masse de l'écaille ainsi qu'un frottement mutuel entre écailles consécutives, en raison de leur chevauchement et du poids de fruits collectés.

Selon un autre mode de réalisation, qui n'est pas exclusif du précédent, le premier arrêtoir et le deuxième arrêtoir peuvent comporter chacun des taquets.

Le fonctionnement est identique à celui décrit ci-dessus, sachant que le débattement divergent est limité lorsque les taquets formant les arrêtoirs conjugués viennent en butée.

La position des arrêtoirs est de préférence identique pour toutes les écailles du collecteur, à l'exception des écailles d'extrémité qui peuvent avoir une configuration différente, par exemple.

Les arrêtoirs, et en particulier les taquets peuvent être ménagés dans une zone de l'écaille s'étendant entre une patte de fixation de l'écaille et une ligne, perpendiculaire à l'axe médian d'écaille, et située dans le plan de l'écaille à mi-distance entre l'extrémité proximale et l'extrémité distale de l'écaille.

Les arrêtoirs se trouvent ainsi à distance des extrémités distales libres des écailles et ne gênent pas la collecte des fruits.

Le positionnement des arrêtoirs sur chaque écaille permet d'ajuster l'amplitude du débattement divergent autorisé.

L'amplitude de débattement divergent des écailles successives peut être choisie de préférence inférieure ou égale à 30 degrés d'angle. Cette amplitude de débattement divergent permet de limiter la taille de la lacune entre le tronc et le plancher d'écaille lorsque l'écaille perd le contact avec le tronc, et de maintenir un chevauchement entre les deux écailles. Ainsi elle revient rapidement d'une position intermédiaire à la position de repos alors même que l'écaille suivante est en contact avec le tronc. Elle recouvre alors la lacune créée après le passage du tronc, en évitant toute lacune entre le bord arrière de l'écaille et le bord frontal de l'écaille suivante, et donc en maintenant un chevauchement entre les deux écailles.

Les arrêtoirs peuvent être ménagés, par exemple, de part et d'autre d'un plan, perpendiculaire à la face supérieure de l'écaille et passant par l'axe médian d'écaille.

En particulier, le premier arrêtoir peut être ménagé à proximité du bord frontal de d'écaille tandis que le deuxième arrêtoir peut être ménagé à proximité du bord arrière de l'écaille.

De préférence, les arrêtoirs peuvent être disposés de telle manière que deux arrêtoirs conjugués de deux écailles successives soient en butée l'un contre l'autre lorsque les deux écailles sont dans leur position de repos.

Comme évoqué précédemment, les écailles présentent deux à deux un chevauchement, c'est-à-dire un recouvrement partiel, de manière à garantir l'étanchéité du plancher à l'égard des fruits collectés. De préférence, il peut s'agir d'un recouvrement entre un bord frontal d'une écaille et le bord arrière d'une écaille suivante en direction de la sortie du collecteur, le bord frontal passant en dessous du bord arrière.

Un chevauchement peut aussi être prévu entre les extrémités libres des écailles des rangées d'écailles conjuguées. Il s'agit d'un chevauchement localisé le long d'une ligne médiatrice du collecteur s'étendant de l'entrée du collecteur à la sortie du collecteur.

Selon une réalisation particulière des écailles, au moins l'un parmi le bord frontal des écailles et un bord de l'extrémité distale des écailles peut présenter un relief de retenue de fruits. Il peut s'agir, par exemple, d'un rebord ou d'une lèvre périphérique. Le relief de retenue fait saillie sur la face supérieure de l'écaille, c'est-à-dire la face recueillant les fruits, et permet d'éviter que des fruits récoltés ne quittent l'écaillent ou n'en soient projetés notamment lors de pivotements de l'écaille. Dans le cas particulier d'un collecteur destiné à une machine à vendanger le rebord sert aussi à contenir et retenir du jus s'écoulant des baies de raisin récoltées.

L'invention concerne également une écaille, et en particulier une écaille destinée à un collecteur de fruits tel que décrit.

L'écaille présente :
- une extrémité proximale
- une extrémité distale,
- un bord frontal reliant l'extrémité proximale à l'extrémité distale
- un bord arrière, opposé au bord frontal et reliant l'extrémité proximale à l'extrémité distale, et
   conformément à l'invention,
- un premier arrêtoir ménagé sur une face supérieure de collecte de fruits de l'écaille au voisinage du bord frontal, et
- un deuxième arrêtoir ménagé sur une face inférieure de l'écaille, opposée à la face supérieure, au voisinage du bord arrière.

Le premier et le deuxième arrêtoir peuvent être configurés de la manière déjà décrite, et en particulier sous la forme de taquets.

Par ailleurs et comme mentionné précédemment, au moins l'un parmi le bord frontal et un bord de l'extrémité distale de l'écaille peut présenter un relief de retenue de fruits distinct du premier arrêtoir.

L'écaille lorsqu'elle est montée sur un support du collecteur, peut être associée à un ressort de rappel pour ramener l'écaille dans sa position de repos. Toutefois, et selon une réalisation préférée de l'écaille, celle-ci peut comporter une patte de fixation de l'écaille sur le support du collecteur, la patte comprenant un matériau élastique de manière à constituer un ressort de rappel de l'écaille.

La patte de fixation peut faire ressort soit en y insérant une lame de ressort soit en la réalisant en un matériau élastique.

La patte de fixation peut être rapportée à l'écaille par vissage. Toutefois, et de préférence la patte de fixation peut également être formée d'une seule pièce avec l'écaille par injection. La patte et l'écaille sont réalisées, par exemple, en un matériau du type thermoplastique élastomère et de préférence de qualité alimentaire.

La patte de fixation peut être située au voisinage de l'extrémité proximale de l'écaille et peut être ménagée de préférence sur la face inférieure, c'est-à-dire la face opposée à celle recevant les fruits.

L'invention concerne également une machine à récolter, et en particulier une machine à vendanger, comprenant au moins un collecteur de fruits tel que décrit et un dispositif de secouage de plants disposé au-dessus du collecteur.

Le dispositif de secouage peut être pourvu d'une pluralité de bras secoueurs qui agitent les plants autour desquels s'engage le collecteur, au fur et à mesure de son déplacement le long d'une rangée de plants. L'agitation des plants a pour effet d'en détacher les fruits, drupes ou baies, qui sont recueillies sur le plancher constitué par les écailles du collecteur autour de leur tronc.

La machine à récolter, pourvue de roues, peut-être du type automotrice ou être une machine tractée. Elle peut intégrer des convoyeurs de fruits disposés le long du collecteur pour acheminer les fruits collectés vers des conteneurs ou vers une table de tri.

D'autres caractéristiques et avantages de l'invention ressortent de la description qui suit, des figures des dessins. Cette description est donnée à titre illustratif et non limitatif.

### Brève description des figures

La figure 1 est une représentation simplifiée d'un collecteur conforme à l'invention.
La figure 2 est une perspective d'une écaille conforme à l'invention, destinée au collecteur et montrant une face supérieure de l'écaille vue de son extrémité distale.
La figure 3 est une perspective d'une écaille conforme à l'invention, destinée au collecteur et montrant une face inférieure de l'écaille.
La figure 4 est une perspective d'une écaille illustrant un détail de sa fixation sur un support du collecteur.
Les figures 5A à 10A sont des vues de dessus d'une partie d'une rangée d'écailles d'un collecteur conforme à l'invention et en illustrent le fonctionnement.
Les figures 5B à 10B sont des vues de dessus d'une partie d'une rangée d'écailles d'un collecteur représentatif de l'état de l'art et qui ne présente pas d'entraves conformes à l'invention et en illustrent le fonctionnement. Elles sont positionnées en regard des figures 5A à 10A de façon à comparer le comportement des écailles au passage d'un tronc Les figures sont représentées en échelle libre.

### Description détaillée de modes de mise en œuvre de l'invention

Dans la description qui suit, des parties identiques, similaires ou équivalentes des différentes figures sont désignées avec les mêmes signes de référence de manière à pouvoir se reporter d'une figure à l'autre.

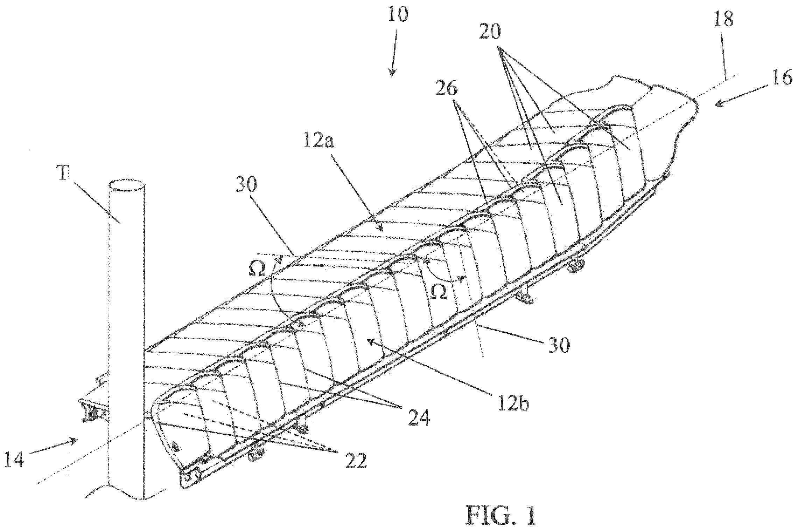

La figure 1 montre un collecteur 10, conforme à l'invention. Il comporte, pour l'essentiel, deux rangées d'écailles 12a, 12b s'étendant depuis une entrée 14 du collecteur jusqu'à une sortie 16 du collecteur parallèlement à un axe médian de collecteur 18.

Chaque rangée d'écailles 12a, 12b comprend une succession d'écailles 20 entre l'entrée 14 et la sortie 16 du collecteur.

Les écailles 20 sont du type à chevauchement, c'est-à-dire à recouvrement partiel.

On peut noter qu'un bord frontal 22 de chaque écaille 20 est recouvert par un bord arrière 24 de l'écaille immédiatement précédente dans la rangée d'écailles correspondante 12a, 12b en direction de la sortie 16 du collecteur 10.

Un chevauchement existe également entre des bords des extrémités distales libres 26 des écailles 20 des deux rangées d'écailles 12a, 12b.

On peut noter que les bords des extrémités distales libres 26 des écailles 20 de l'une des rangées d'écailles 12b passent tous au-dessus des bords des extrémités distales libres des écailles adjacentes de l'autre rangée d'écailles 12a.

La figure 1 montre les écailles 20 du collecteur dans une position de repos. Les écailles 20 présentent chacune un axe médian d'écaille 30 qui forme avec l'axe médian de collecteur 18 un angle d'ouverture aigu Ω vu depuis l'entrée du collecteur.

L'angle d'ouverture formé au repos est sensiblement le même pour chaque écaille 20.

L'angle aigu traduit le fait que les écailles occupent une position de repos dans laquelle leur extrémité libre distale 26 est tournée en direction de la sortie 16 du collecteur 10.

Le collecteur de fruits 10 est déplacé sur une rangée de plants en alignant au mieux l'axe médian de collecteur sur cette rangée. Ainsi, les troncs T des plants parcourent le collecteur 10 le long de son axe médian 18, en repoussant successivement les écailles par contact avec leur bord frontal depuis l'entrée 14 du collecteur jusqu'à sa sortie 16.

Sous l'effet d'un tronc T les écailles pivotent en étant davantage défléchies vers l'arrière. Ceci vient à réduire temporairement l'angle aigu que forme chaque écaille avec l'axe médian au passage du tronc.

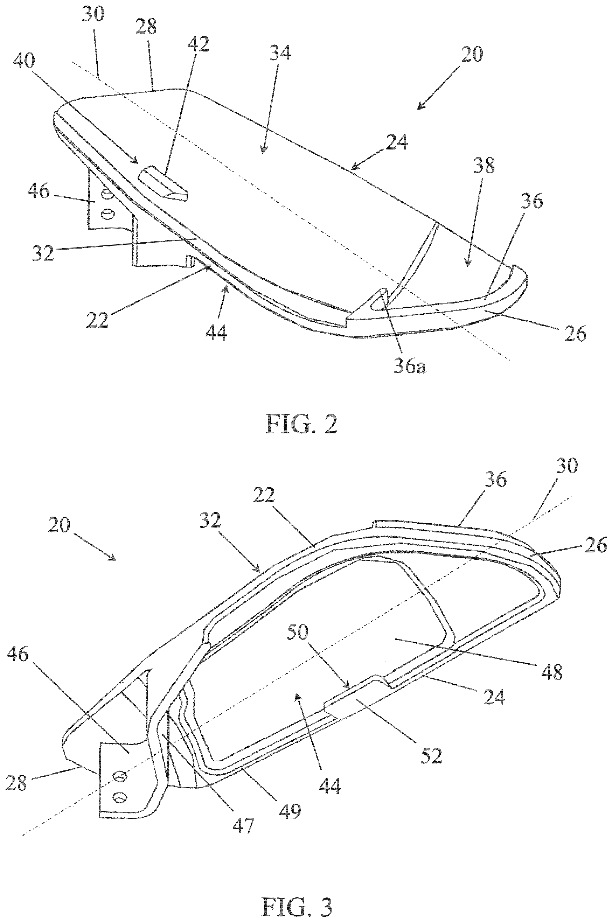

La figure 2 montre une écaille individuelle 20 du collecteur. L'écaille, et en particulier sa face supérieure visible à la figure 2 s'étend pour l'essentiel selon un plan, désigné par "plan de l'écaille". L'écaille est réalisée par injection d'une matière plastique telle qu'un thermoplastique élastomère de qualité alimentaire.

Un axe médian 30 de l'écaille s'étend, dans le plan de l'écaille, entre une extrémité proximale 28 et une extrémité distale 26.

De part et d'autre de l'axe médian on note un bord frontal 22 de l'écaille 20 destiné à être tourné vers l'entrée du collecteur, et un bord arrière 24 destiné à être tourné vers la sortie du collecteur.

Le bord frontal 22 est pourvu sur une face supérieure 34 de l'écaille d'un relief de retenue de fruits. Il s'agit d'un rebord 32 surélevé qui fait saillie sur la face supérieure 34 sensiblement plane.

Un bord de l'extrémité distale 26 de l'écaille, qui forme un angle avec le bord frontal 22 comprend également un rebord 36 dans la partie qui n'est pas susceptible d'être chevauchée par une autre écaille dans une rampe d'écailles. Le rebord 36 de l'extrémité distale est plus haut encore que le rebord 32 du bord frontal. Il constitue également un relief de retenue de fruits. Le rebord 36 de l'extrémité distale 26 présente un repli 36a vers l'axe médian 30 de l'écaille au droit d'une légère dépression 38 de la face supérieure 34. Cette dépression est susceptible de recueillir du jus ou un amas de fruits récoltés dans une zone non balayée par un chevauchement des écailles et qui seraient susceptibles de franchir des lacunes entre deux écailles lors d'un retour rapide de l'écaille vers sa position de repos.

On peut noter sur la face supérieure 34, à proximité du bord frontal 22 un premier arrêtoir 40. L'arrêtoir 40 se présente sous la forme d'un taquet 42 qui fait saillie sur la face supérieure 34 de l'écaille, et qui dépasse la hauteur du rebord 32 du bord frontal 22.

Le premier arrêtoir 40 fait partie d'une entrave de limitation d'une amplitude de débattement entre écailles, lorsque l'écaille est montée sur un collecteur. Au voisinage du premier arrêtoir 40, et sur une face inférieure 44 de l'écaille, se trouve une patte de fixation 46 de l'écaille formée d'une seule pièce avec l'écaille.

La face inférieure 44 de l'écaille est mieux visible sur la figure 3. Elle présente une dépression 48 à fond plat délimitée par un rebord périphérique 49. Dans l'exemple particulier de la figure 3, le rebord périphérique 49 est pourvu d'un taquet 52 faisant saillie sur le rebord en direction de l'axe médian d'écaille 30. Le taquet 52 constitue un deuxième arrêtoir 50 qui fait également partie d'une entrave de limitation de débattement entre écailles.

En l'absence du taquet 52, le bord 49 pourrait constituer également un arrêtoir.

La patte de fixation 46 de l'écaille est également mieux visible sur la figure 3. La patte de fixation 46 se présente sous la forme d'un bras flexible 47 avec une extrémité solidaire de l'écaille et une extrémité libre pourvue de trous de fixation.

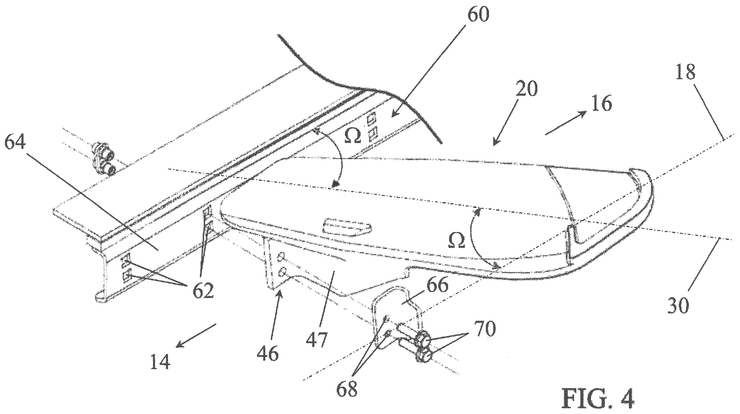

La figure 4 montre le montage d'une écaille 20 sur un support d'écailles 60 dont seule une partie est visible.

Le support d'écailles 60 se présente sous la forme d'un rail profilé avec des perforations 62 sur une face principale 64 destinée à la fixation d'écailles. Le rail s'étend parallèlement à l'axe médian 18 du collecteur. On peut noter que l'axe médian d'écaille 30 forme avec le support d'écaille 60 un angle Ω, vu depuis la sortie 16 du collecteur identique à l'angle Ω qu'il forme avec l'axe médian de collecteur 18, vu depuis l'entrée 14 du collecteur. L'extrémité libre de la patte de fixation 46 est plaquée contre la face principale 64 du support d'écailles au moyen d'une plaque de serrage 66. La plaque de serrage 66 présente des perçages 68 ajustés sur les trous de fixation de la patte de fixation 46 de l'écaille et sur les perforations 62 du support d'écailles 60, pour le passage de boulons de serrage 70.

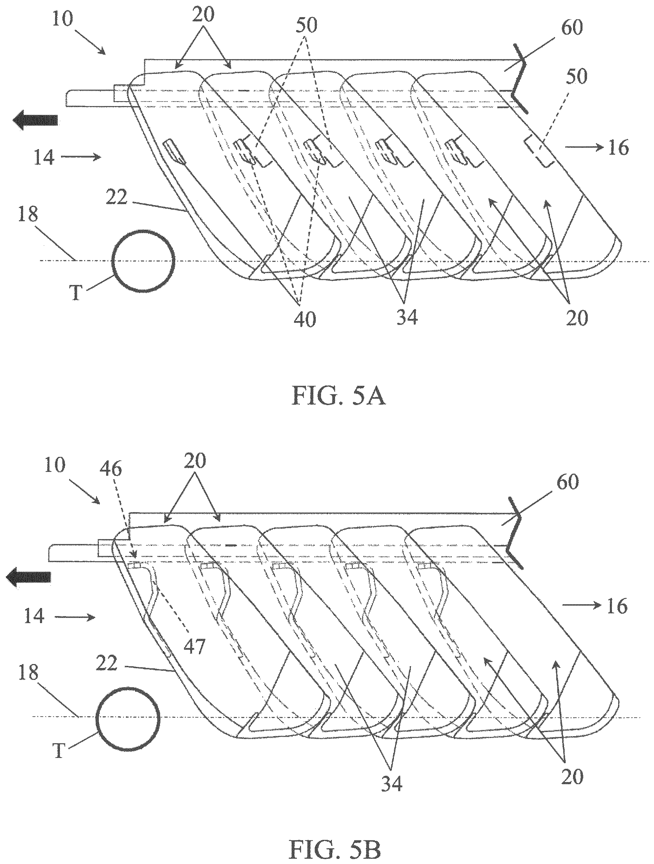

Les figures décrites dans ce qui suit illustrent le mouvement des écailles au passage d'un tronc T d'un plant. Pour des raisons de simplification, et pour une meilleure lisibilité des figures, seules 5 écailles successives d'une seule des rangées d'écailles sont représentées. Par ailleurs, les figures 5A, 6A, 7A, 8A, 9A et 10A illustrent un fonctionnement des écailles selon l'invention alors que les figures 5B, 6B, 7B, 8B, 9B, 10B illustrent un fonctionnement des écailles de façon classique dans l'état de l'art sans les caractéristiques de l'invention. Il convient toutefois de garder à l'esprit que le collecteur dispose de deux rangées d'écailles conjuguées, montrées à la figure 1. Les figures qui suivent ne comportent pas non plus toutes les parties cachées pour des raisons de simplification et de visibilité.

La figure 5A montre l'entrée 14 d'un collecteur 10 conforme à l'invention à l'approche du tronc T d'un plant sensiblement aligné sur l'axe médian 18 du collecteur. Le collecteur est déplacé sensiblement selon l'axe médian en direction du tronc et le bord frontal 22 de la première écaille n'a pas encore atteint le tronc T. Le sens de déplacement du collecteur par rapport au tronc est indiqué par une flèche sur la figure 5A et les figures suivantes correspondantes.

L'ensemble des écailles 20 se trouvent dans leur position de repos, légèrement défléchie vers la sortie 16 du collecteur 10.

Dans la suite de la description les termes "première écaille", "deuxième écaille", "écaille suivante" et "écaille précédente" s'entendent depuis l'entrée 14 du collecteur vers la sortie 16 du collecteur.

A l'exception du premier arrêtoir de la première écaille, les premiers arrêtoirs 40 de chaque écaille s'étendent dans la dépression de la face inférieure de l'écaille précédente. On peut également noter que le premier arrêtoir 40 de chaque écaille, à l'exception de la première écaille à l'entrée 14 du collecteur se trouve en butée contre le deuxième arrêtoir 50 de l'écaille précédente en direction de l'entrée 14 du collecteur. Les arrêtoirs 40 et 50 et plus précisément les taquets qui les constituent, sont représentés en trait discontinu car cachés par les faces supérieures 34 des écailles.

Le premier arrêtoir 40 d'une écaille et le deuxième arrêtoir 50 de l'écaille précédente constituent une entrave à un débattement divergent de ces deux écailles, comme cela apparaît sur les figures suivantes.

Les pattes de fixation ne sont pas ici représentées.

La figure 5B montre une rampe d'écailles similaire à celle de la figure 5A, mais dépourvues d'arrêtoirs. Les écailles occupent une position de repos comparable dans laquelle le bras flexible 47 de leur patte de fixation 46 n'exerce aucune force de rappel dans un plan parallèle à celui des faces principales des écailles.

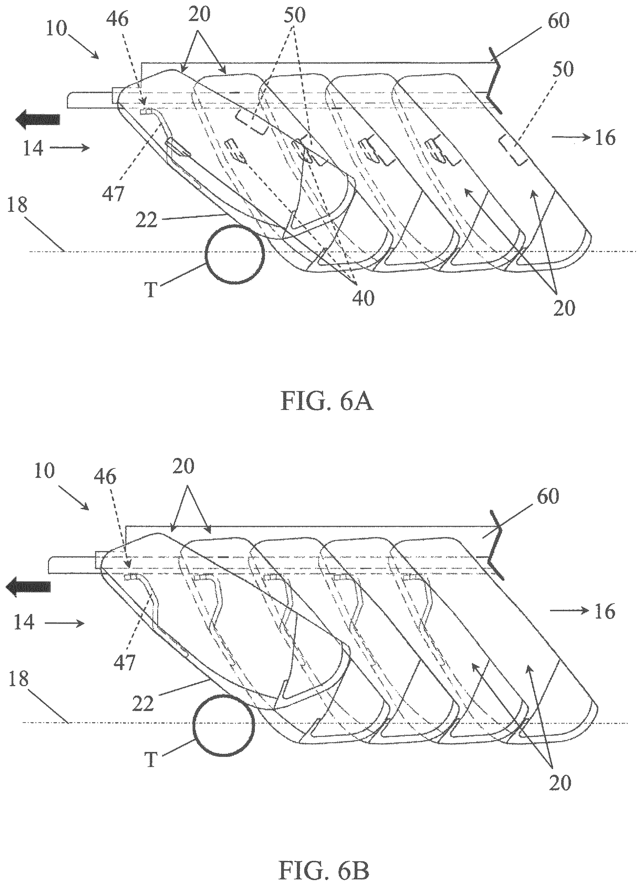

La figure 6A montre un début de déflexion de la première écaille du collecteur vers la sortie 16 du collecteur. La déflexion a lieu essentiellement dans le plan de collecte défini par l'ensemble des écailles. Elle résulte du déplacement du collecteur par rapport au tronc T.

La déflexion a lieu en raison d'une interaction entre le bord frontal 22 de la première écaille avec le tronc T.

La deuxième écaille est toujours dans sa position de repos. On peut noter que le deuxième arrêtoir 50 de la première écaille, c'est-à-dire l'arrêtoir sur la face inférieure de la première écaille, décolle du premier arrêtoir 40 de la deuxième écaille, c'est-à-dire l'arrêtoir sur la face supérieure de la deuxième écaille. Ce mouvement est un mouvement dans lequel les première et deuxième écailles convergent. Les arrêtoirs n'ont aucun effet d'entrave dans ce mouvement.

Les arrêtoirs des écailles suivantes restent en butée.

On peut noter aussi que le pivotement de la première écaille est accompagné par une déformation élastique du bras 47 de la patte de fixation 46. Les pattes de fixation ne sont pas représentées sur les écailles suivantes, en position de repos, mais leurs pattes de fixation respectives s'assimilent à celles représentées à la figure 6B.

Par comparaison on peut noter sur cette figure 6B que le mouvement serait le même pour des écailles sans arrêtoirs.

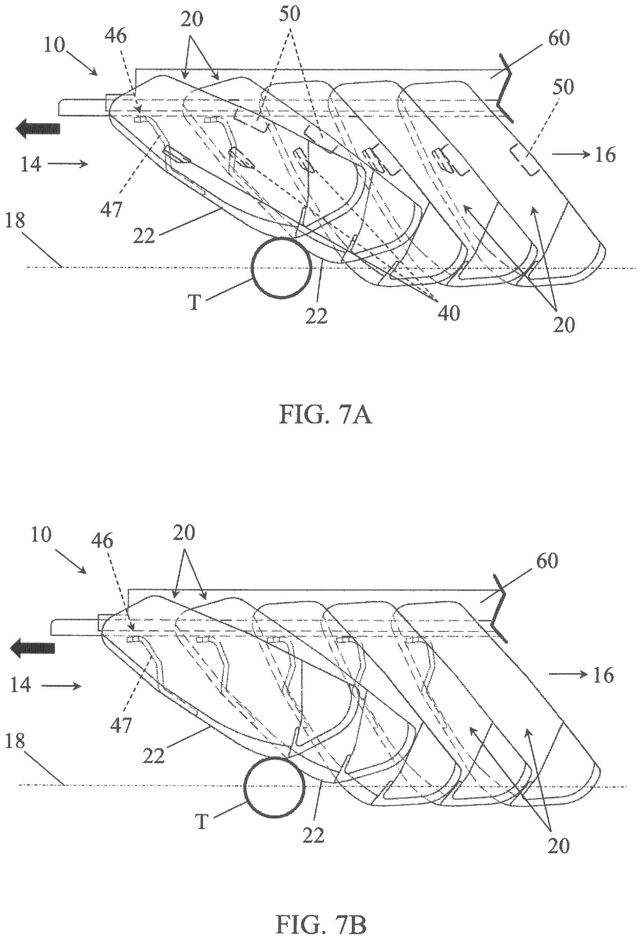

La figure 7A illustre la poursuite de l'avancement du collecteur 10 par rapport au tronc T. Désormais les deux premières écailles 20 sont défléchies vers l'arrière, c'est-à-dire vers la sortie 16 du collecteur 10. La première écaille étant davantage défléchie que la deuxième.

Le deuxième arrêtoir 50 de la première et de la deuxième écaille sont respectivement décollés des premiers arrêtoirs 40 de la deuxième et de la troisième écaille. Les arrêtoirs suivants sont toujours en contact.

On peut noter sur la première écaille une déformation élastique plus accentuée du bras 47 de la patte de fixation 46, emmagasinant ainsi une énergie de plus en plus importante qui sera consommée lors du rappel de l'écaille.

Le mouvement des écailles du collecteur de la figure 7B, dépourvues d'arrêtoirs reste identique à celui de la figure 7A.

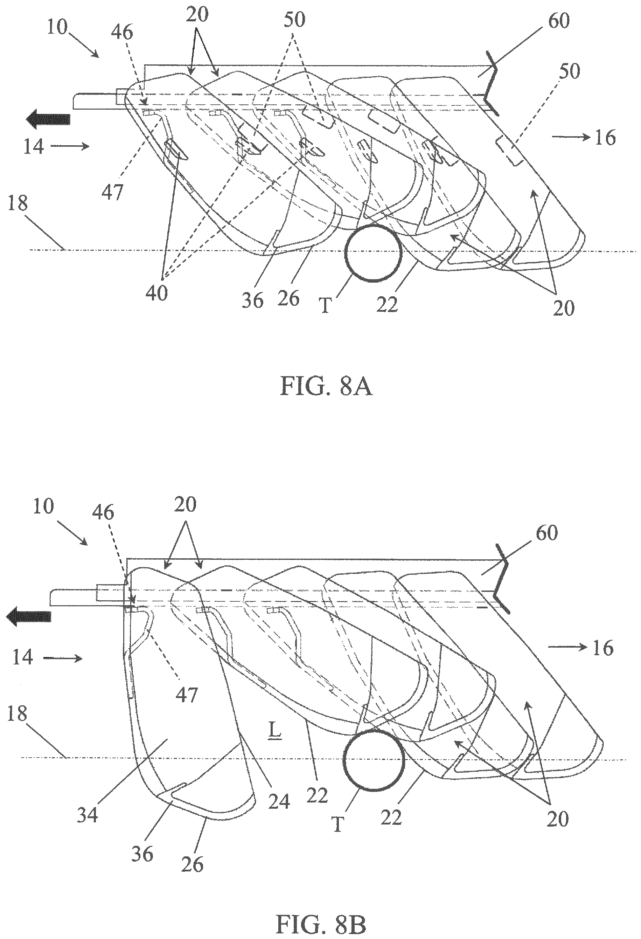

La figure 8A montre le collecteur dans une position relative par rapport au tronc dans laquelle la deuxième et la troisième écaille sont défléchies vers la sortie 16 du collecteur. La première écaille n'est plus en contact avec le tronc T. La force de rappel exercée par l'énergie élastique emmagasinée lors de la déformation du bras 47 de la patte de fixation 46 de la première écaille la fait pivoter vers sa position de repos telle que représentée en figure 5A. On constate toutefois que le rebord 36 de l'extrémité distale 26 commence à peine à atteindre l'axe médian de collecteur 18 et donc que l'écaille est dans une position intermédiaire vers sa position de repos.

Dans le mouvement de pivotement le deuxième arrêtoir 50 de la première écaille vient en appui sur le premier arrêtoir 40 de la deuxième écaille et empêche un retour complet vers la position de repos de la première écaille tant que la deuxième écaille est retenue en contact contre le tronc T. Les arrêtoirs ont dans ce cas un rôle d'entrave limitant le débattement divergent entre la première et la deuxième écaille lors d'un retour de la première écaille vers sa position de repos. Retenue par les arrêtoirs, le retour de la première écaille vers sa position de repos est progressif à mesure que le bord de l'extrémité libre distale 26 de la deuxième écaille glisse sur le tronc T. Le chevauchement des deux écailles persiste durant toute la phase de retour en position de repos.

Par contraste on peut observer sur la figure 8B, qui correspond au collecteur sans entrave, que l'énergie emmagasinée dans la patte de fixation 46 lors du contact de l'écaille avec le tronc 7 ramène brusquement et instantanément celle-ci dans sa position de repos. Lors de ce mouvement, l'écaille passe toutefois temporairement par une position outrepassant sa position de repos telle que représentée en figure 5B, en créant une lacune L. La lacune L, temporaire jusqu'au retour de l'écaille en position de repos, se trouve sur le côté du tronc T tourné vers l'entrée 14 du collecteur. Elle constitue une ouverture importante du plancher de collecte entre le bord frontal 22 de la deuxième écaille et le bord arrière 24 de la première écaille. Le chevauchement des deux écailles est à cet instant quasi inexistant. L'ouverture du plancher de collecte est susceptible d'occasionner une perte de fruits au travers de cette lacune, et notamment de fruits se trouvant initialement sur la face supérieure 34 de l'écaille et ne pouvant suivre le mouvement brusque de l'écaille lors de la perte de contact avec le tronc.

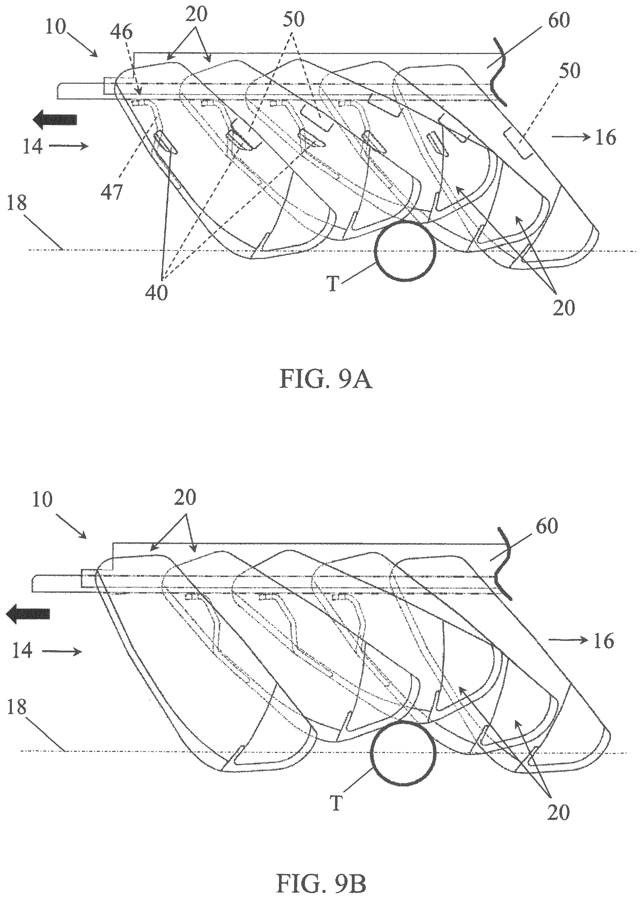

La figure 9A montre un stade ultérieur de l'avancement du collecteur 10 par rapport au tronc dans lequel la première écaille est quasiment revenue dans sa position de repos sans toutefois l'avoir complètement atteinte et dans laquelle la deuxième, la troisième et la quatrième écaille sont en interaction avec le tronc. On observe que la déflexion des écailles vers la sortie 16 du collecteur 10 est progressive. Le retour des écailles vers leur position de repos est également progressif en raison de l'entrave formée par les arrêtoirs qui interdit un débattement divergent excessif au retour des écailles dans la position de repos. Il n'y a ainsi pas de lacune de créée entre un bord arrière d'une écaille et le bord frontal de l'écaille suivante, et le plancher de collecte reste au plus près du tronc T.

La figure 9B montre le collecteur sans arrêtoirs. La première écaille est revenue à la position de repos et la lacune de la figure 8B est quasiment résorbée.

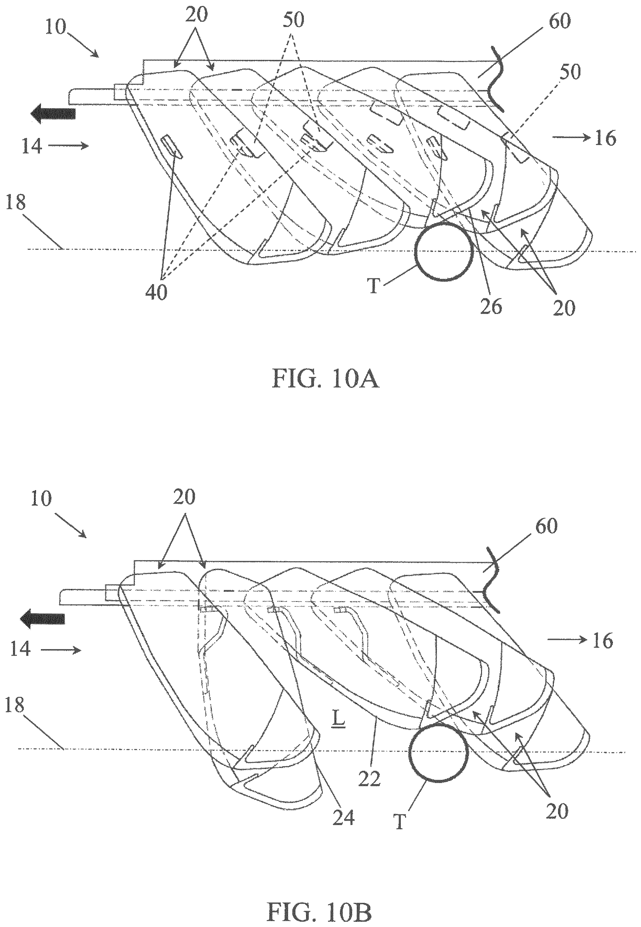

La figure 10A illustre le retour progressif de la deuxième écaille vers sa position de repos. La deuxième écaille est retenue par le premier arrêtoir 40 de la troisième écaille qui vient buter sur le deuxième arrêtoir 50 de la deuxième écaille. Le bord de l'extrémité distale libre 26 de la troisième écaille glisse sur le tronc et freine le retour de la deuxième écaille vers sa position de repos.

La première écaille est dans sa position de repos. Quasiment aucune lacune du plancher de collecte ne se forme autour du tronc.

La figure 10B du dispositif sans entrave, illustre la libération brusque de la deuxième écaille. Celle-ci outrepasse sa position de repos en raison de l'inertie de son mouvement lors de son retour rapide depuis la position défléchie par le tronc vers la position de repos.

Une lacune L se forme à cet instant entre le bord arrière 24 de la deuxième écaille et le bord frontal 22 de la troisième écaille sur le côté du tronc T tourné vers l'entrée 14 du collecteur. Il y a à nouveau ici une quasi absence de chevauchement temporaire entre ces deux écailles.

Cette réalisation d'un plancher d'écailles sans entraves génère ainsi successivement des lacunes temporaires L importantes entre chaque écaille et l'écaille suivante, les lacunes étant susceptibles d'occasionner des risques importants de perte de fruits au cours de leur collecte.

## Revendications

1. Collecteur de fruits (10) à rangées d'écailles (12a, 12b) conjuguées, les rangées d'écailles s'étendant respectivement entre une entrée (14) du collecteur et une sortie (16) du collecteur parallèlement à un axe médian de collecteur (18), et les rangées d'écailles comprenant respectivement une succession d'écailles (20), à chevauchement, montées pivotantes sur un support (60), avec un rappel dans une position de repos, dans lequel
- chaque écaille présente une extrémité proximale (28) tournée vers le support et une extrémité distale libre (26) opposée à l'extrémité proximale (28), un bord frontal (22) tourné vers l'entrée (14) du collecteur, et un bord arrière (24) tourné vers la sortie (16) du collecteur, le bord frontal (22) et le bord arrière (24) s'étendant respectivement entre l'extrémité proximale (28) et l'extrémité distale (26) de l'écaille,
- chaque écaille présente un axe médian d'écaille (30), longitudinal, s'étendant de l'extrémité proximale (28) à l'extrémité distale (26) et formant, dans la position de repos de l'écaille, un angle d'ouverture (Ω) aigu avec l'axe médian de collecteur (18), par rapport à l'entrée du collecteur et
- chaque écaille (20) présente une liberté de pivotement par rapport au support (60), entre la position de repos et au moins une position repliée vers la sortie (16) du collecteur, réduisant l'angle d'ouverture,
- au moins une entrave limite une amplitude de débattement divergeant, respectivement entre deux écailles (20) successives d'une rangée d'écailles lors d'un mouvement de pivotement d'une écaille (20) entre la position repliée et la position de repos,
**caractérisé en ce que** l'entrave comprend une paire d'arrêtoirs (40, 50) conjugués, à complémentarité de forme, solidaires respectivement desdites deux écailles (20) successives.

2. Collecteur selon la revendication 1, dans lequel chaque écaille (20) comprend un premier arrêtoir (40) ménagé sur une face supérieure (34) de collecte de fruits de l'écaille et un deuxième arrêtoir (50) ménagé sur une face inférieure (44) de l'écaille, opposée à la face supérieure (34).

3. Collecteur selon la revendication 2, dans lequel le premier arrêtoir (40) comprend un taquet (42) faisant saillie sur la face supérieure de l'écaille et dans lequel le deuxième arrêtoir (50) comprend un rebord (49) d'une dépression (48) débouchant sur la face inférieure (44) de l'écaille.

4. Collecteur selon la revendication 2, dans lequel le premier arrêtoir (40) et le deuxième arrêtoir (50) comportent des taquets (42, 52), les taquets étant disposés sensiblement à égale distance d'un axe de rotation de l'écaille.

5. Collecteur selon l'une quelconque des revendications 2 à 4, dans lequel les arrêtoirs (40, 50) sont ménagés dans une zone de l'écaille s'étendant entre une patte de fixation de l'écaille (46) et une ligne, perpendiculaire à l'axe médian d'écaille, et située, dans un plan de l'écaille, à mi-distance entre une l'extrémité proximale et l'extrémité distale de l'écaille.

6. Collecteur selon l'une quelconque des revendications 2 à 5, dans lequel les arrêtoirs (40, 50) sont ménagés de part et d'autre d'un plan, perpendiculaire à la face supérieure de l'écaille et passant par l'axe médian d'écaille.

7. Collecteur selon la revendication 6, dans lequel le premier arrêtoir (40) est ménagé à proximité du bord frontal de d'écaille et dans lequel le deuxième arrêtoir (50) est ménagé à proximité du bord arrière de l'écaille.

8. Collecteur selon l'une quelconque des revendications précédentes, dans lequel une amplitude angulaire de débattement divergent des écailles (20) successives est inférieure ou égale à 30 degrés d'angle.

9. Collecteur selon l'une quelconque des revendications précédentes, présentant respectivement un chevauchement entre un bord frontal (22) d'une écaille et le bord arrière d'une écaille (24) suivante en direction de la sortie du collecteur (16), ledit bord frontal passant en dessous dudit bord arrière.

10. Collecteur selon l'une quelconque des revendications précédentes, dans lequel au moins l'un parmi le bord frontal (22) des écailles et un bord de l'extrémité distale (26) des écailles présente un relief (32, 36) de retenue de fruits.

11. Collecteur selon l'une quelconque des revendications précédentes, présentant un chevauchement entre les extrémités libres (26) des écailles des rangées d'écailles conjuguées (12a, 12b).

12. Ecaille pour collecteur de fruits présentant :
- une extrémité proximale (28)
- une extrémité distale (26),
- un bord frontal (22) reliant l'extrémité proximale à l'extrémité distale
- un bord arrière (24), opposé au bord frontal et reliant l'extrémité proximale à l'extrémité distale,
- un premier arrêtoir (40) ménagé sur une face supérieure (34) de collecte de fruits de l'écaille au voisinage du bord frontal, et
**caractérisée par** :
- un deuxième arrêtoir (50) ménagé sur une face inférieure (44) de l'écaille, opposée à la face supérieure, au voisinage du bord arrière.

13. Ecaille selon la revendication 12, dans laquelle au moins l'un parmi le bord frontal (22) et un bord de l'extrémité distale (26) présente un relief (32, 36) de retenue de fruits distinct du premier arrêtoir (40).

14. Ecaille selon l'une quelconque des revendications 12 ou 13, comprenant une patte de fixation (46) de l'écaille (20) sur un support (30) la patte de fixation comprenant un matériau élastique.

15. Machine à récolter, et en particulier machine à vendanger, comprenant au moins un collecteur de fruits (10) selon l'une quelconque des revendications 1 à 11, et un dispositif de secouage de plants disposé au-dessus du collecteur.

## Patentansprüche

1. Obstemtemaschine (10) mit verbundenen Reihen aus Platten (12a, 12b), wobei sich die Reihen aus Platten jeweils zwischen einem Einlass (14) der Erntemaschine und einem Auslass (16) der Erntemaschine parallel zu einer Mittelachse der Erntemaschine (18) erstrecken und die Reihen aus Platten jeweils eine überlappende Folge von Platten (20) umfassen, die schwenkbar auf einem Träger (60) montiert sind, mit einer Vorspannung in eine Ruheposition, in der
- jede Platte ein proximales Ende (28), das dem Träger zugewandt ist, und ein freies distales Ende (26) gegenüber dem proximalen Ende (28), eine Vorderkante (22), die dem Einlass (14) der Erntemaschine zugewandt ist, und eine Hinterkante (24) aufweist, die dem Auslass (16) der Erntemaschine zugewandt ist, wobei sich die Vorderkante (22) und die Hinterkante (24) jeweils zwischen dem proximalen Ende (28) und dem distalen Ende (26) der Platte erstrecken,
- jede Platte eine Plattenlängsmittelachse (30) aufweist, die sich von dem proximalen Ende (28) zu dem distalen Ende (26) erstreckt und in der Ruheposition der Platte einen spitzen Öffnungswinkel (Ω) mit der Mittelachse der Erntemaschine (18) in Bezug auf den Einlass der Erntemaschine bildet, und
- jede Platte (20) einen Schwenkfreiheitsgrad in Bezug auf den Träger (60) zwischen der Ruheposition und mindestens einer Position aufweist, die in Richtung des Auslasses (16) der Erntemaschine eingeklappt ist, wodurch sich der Öffnungswinkel reduziert,
- mindestens ein Hindernis einen auseinandergehenden Ausschlagsgrad jeweils zwischen zwei aufeinanderfolgenden Platten (20) einer Reihe aus Platten während einer Schwenkbewegung einer Platte (20) zwischen der eingeklappten Position und der Ruheposition begrenzt,
**dadurch gekennzeichnet, dass** das Hindernis ein Paar an Arretierungen (40, 50) umfasst, die formschlüssig jeweils mit zwei aufeinanderfolgenden Platten (20) fest verbunden sind.

2. Erntemaschine nach Anspruch 1, wobei jede Platte (20) eine erste Arretierung (40), die auf einer Oberseite (34) der Obsterntemaschine der Platte vorgesehen ist, und eine zweite Arretierung (50) umfasst, die auf einer Unterseite (44) der Platte gegenüber der Oberseite (34) vorgesehen ist.

3. Erntemaschine nach Anspruch 2, wobei die erste Arretierung (40) einen Anschlag (42) umfasst, der auf der Oberseite der Platte vorsteht, und wobei die zweite Arretierung (50) eine Einfassung (49) einer Vertiefung (48) umfasst, die in die Unterseite (44) der Platte mündet.

4. Erntemaschine nach Anspruch 2, wobei die erste Arretierung (40) und die zweite Arretierung (50) Anschläge (42, 52) umfassen, wobei die Anschläge im Wesentlichen im gleichen Abstand zu einer Drehachse der Platte angeordnet sind.

5. Erntemaschine nach einem der Ansprüche 2 bis 4, wobei die Arretierungen (40, 50) in einem Bereich der Platte vorgesehen sind, der sich zwischen einer Befestigungslasche der Platte (46) und einer Linie senkrecht zur der Mittelachse der Platte erstreckt und sich in einer Ebene der Platte in halbem Abstand zwischen dem proximalen Ende und dem distalen Ende der Platte befindet.

6. Erntemaschine nach einem der Ansprüche 2 bis 5, wobei die Arretierungen (40, 50) auf beiden Seiten einer Ebene senkrecht zu der Oberseite der Platte und die Mittelachse der Platte durchlaufend vorgesehen sind.

7. Erntemaschine nach Anspruch 6, wobei die erste Arretierung (40) in der Nähe der Vorderkante der Platte vorgesehen ist und wobei die zweite Arretierung (50) in der Nähe der Hinterkante der Platte vorgesehen ist.

8. Erntemaschine nach einem der vorhergehenden Ansprüche, wobei ein auseinandergehendes Ausschlagswinkelmaß der aufeinanderfolgenden Platten (20) kleiner oder gleich 30 Winkelgrad ist.

9. Erntemaschine nach einem der vorhergehenden Ansprüche, jeweils eine Überlappung zwischen einer Vorderkante (22) einer Platte und der Hinterkante einer nachfolgenden Platte (24) in Richtung des Auslasses der Erntemaschine (16) aufweisend, wobei die Vorderkante unter der Hinterkante verläuft.

10. Erntemaschine nach einem der vorhergehenden Ansprüche, wobei mindestens eine von der Vorderkante (22) der Platten und einer Kante des distalen Endes (26) der Platten eine Erhebung (32, 36) zum Halten von Obst aufweist.

11. Erntemaschine nach einem der vorhergehenden Ansprüche, eine Überlappung zwischen den freien Enden (26) der Platten der verbundenen Reihen aus Platten (12a, 12b) aufweisend.

12. Platte für Obsterntemaschine, aufweisend:
- ein proximales Ende (28),
- ein distales Ende (26),
- eine Vorderkante (22), die das proximale Ende mit dem distalen Ende verbindet,
- eine Hinterkante (24) gegenüber der Vorderkante, die das proximale Ende mit dem distalen Ende verbindet,
- eine erste Arretierung (40), die auf einer Oberseite (34) der Obsterntemaschine der Platte benachbart zu der Vorderkante vorgesehen ist, und **gekennzeichnet durch**:
- eine zweite Arretierung (50), die auf einer Unterseite (44) der Platte gegenüber der Oberseite benachbart zu der Hinterkante vorgesehen ist.

13. Platte nach Anspruch 12, wobei mindestens eine von der Vorderkante (22) und einer Kante des distalen Endes (26) eine Erhebung (32, 36) zum Halten von Obst getrennt von der ersten Arretierung (40) aufweist.

14. Platte nach einem der Ansprüche 12 oder 13, umfassend eine Befestigungslasche (46) der Platte (20) auf einem Träger (30), wobei die Befestigungslasche ein elastisches Material umfasst.

15. Sammelmaschine, und insbesondere Traubenerntemaschine, umfassend mindestens eine Obsterntemaschine (10) nach einem der Ansprüche 1 bis 11 und eine Pflanzenrüttelvorrichtung, die über der Erntemaschine angeordnet ist.

## Claims

1. A fruit collector (10) with rows of coupled scales (12a, 12b), the rows of scales extending respectively between an intake (14) of the collector and an output (16) of the collector parallel to a median axis of the collector (18), and the rows of scales respectively comprising a succession of scales (20) in overlapping relationship and mounted pivotably on a support (60) with return to a rest position, wherein
- each scale has a proximal end (28) turned towards the support and a free distal end (26) opposite to the proximal end (28), a front edge (22) turned towards the intake (14) of the collector and a rear edge (24) turned towards the output (16) of the collector, the front edge (22) and the rear edge (24) respectively extending between the proximal end (28) and the distal end (26) of the scale,
- each scale has a longitudinal median scale axis (30) extending from the proximal end (28) to the distal end (26) and in the rest position of the scale forming an acute spread angle (Ω) with the median axis of the collector (18) with respect to the intake of the collector, and
- each scale (20) has a freedom for pivotal movement with respect to the support (60) between the rest position and at least one position of being bent back towards the output (16) of the collector, reducing the spread angle, and
- at least one impediment limits an amplitude of divergent displacement respectively between two successive scales (20) of a row of scales upon a pivotal movement of a scale (20) between the bent-back position and the rest position,
**characterised in that** the impediment comprises a pair of combined stops (40, 50) of complementary shape which are respectively fixed with respect to said two successive scales (20).

2. A collector according to claim 1 wherein each scale (20) comprises a first stop (40) provided on an upper fruit-collecting face (34) of the scale and a second stop (50) provided on a lower face (44) of the scale, that is opposite to the upper face (34).

3. A collector according to claim 2 wherein the first stop (40) comprises a latch (42) projecting on the upper face of the scale and wherein the second stop (50) comprises a rim (49) of a depression (48) opening on to the lower face (44) of the scale.

4. A collector according to claim 2 wherein the first stop (40) and the second stop (50) comprise latches (42, 52), the latches being disposed substantially at an equal distance from an axis of rotation of the scale.

5. A collector according to any one of claims 2 to 4 wherein the stops (40, 50) are disposed in a zone of the scale extending between a fixing leg of the scale (46) and a line perpendicular to the median scale axis and disposed In a plane of the scale halfway between the proximal end and the distal end of the scale.

6. A collector according to any one of claims 2 to 5 wherein the stops (40, 50) are provided on respective sides of a plane perpendicular to the upper face of the scale and passing through the median scale axis.

7. A collector according to claim 6 wherein the first stop (40) is provided in the proximity of the front edge of the scale and wherein the second stop (50) is provided in the proximity of the rear edge of the scale.

8. A collector according to any one of the preceding claims wherein an angular amplitude of divergent displacement of the successive scales (20) is less than or equal to 30 degrees of angle.

9. A collector according to any one of the preceding claims respectively having an overlap between a front edge (22) of a scale and the rear edge of a following scale (24) in the direction of the output of the collector (16), said front edge passing below said rear edge.

10. A collector according to any one of the preceding claims wherein at least one of the front edge (22) of the scales and an edge of the distal end (26) of the scales has a fruit-retaining relief portion (32, 36).

11. A collector according to any one of the preceding claims having an overlap between the free ends (26) of the scales of the rows of coupled scales (12a, 12b).

12. A scale for a fruit collector comprising
- a proximal end (28),
- a distal end (26),
- a front edge (22) connecting the proximal end to the distal end,
- a rear edge (24) opposite to the front edge and connecting the proximal end to the distal end,
- a first stop (40) provided on an upper fruit-collecting face (34) of the scale in the vicinity of the front edge, and
**characterised by**
- a second stop (50) provided on a lower face (44) of the scale opposite to the upper face in the vicinity of the rear edge.

13. A scale according to claim 12 wherein at least one of the front edge (22) and an edge of the distal end (26) has a fruit-retaining relief portion (32, 36) separate from the first stop (40).

14. A scale according to either one of claims 12 and 13 comprising a leg (46) for fixing the scale (20) on a support (30), the fixing leg comprising an elastic material.

15. A harvesting machine and in particular a grape-harvesting machine comprising at least one fruit collector (10) according to any one of claims 1 to 11 and a device for shaking plants, that is disposed above the collector.
